(19) Europäisches Patentamt
European Patent Office
Office européen des brevets

(11) EP 2 202 702 A1

(12) EUROPEAN PATENT APPLICATION

(43) Date of publication:
30.06.2010 Bulletin 2010/26

(51) Int Cl.:
*G07F 9/02* (2006.01)

(21) Application number: 09179783.7

(22) Date of filing: 18.12.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 26.12.2008 JP 2008335273

(71) Applicant: FUJITSU LIMITED
Kawasaki-shi,
Kanagawa 211-8588 (JP)

(72) Inventors:
• Sakaguchi, Kazutoshi
Kawasaki-shi Kanagawa 211-8588 (JP)

• Yamaji, Takayuki
Kawasaki-shi Kanagawa 211-8588 (JP)
• Horie, Takefumi
Kawasaki-shi Kanagawa 211-8588 (JP)
• Teranishi, Kotaro
Kawasaki-shi Kanagawa 211-8588 (JP)
• Morioka, Makoto
Kawasaki-shi Kanagawa 211-8588 (JP)
• Hirano, Takashi
Kawasaki-shi Kanagawa 211-8588 (JP)

(74) Representative: Lewin, David Nicholas
Haseltine Lake LLP
Lincoln House, 5th Floor
300 High Holborn
London WC1V 7JH (GB)

(54) **Goods selection apparatus and method**

(57) A goods selection apparatus for selecting goods on the basis of displayed goods information. The goods selection apparatus includes a display unit for displaying goods information, a detector for detecting individually a plurality of potential customers in front of the display unit, a control unit for controlling the display unit to display a plurality of display areas in the display unit, each of the display areas displaying information of respective one of the goods, the number of the plurality of display areas corresponding to the number of the plurality of potential customers detected by the detector, an input unit for receiving an input designating any one of the display areas by any of the potential customers; and a selector for selecting one of the goods corresponding to the one of display areas designated by the input unit.

FIG. 2

## Description

FIELD

The embodiment discussed relates to a goods selection apparatus.

BACKGROUND

There is known a display which has a cylindrical shape, for example, and which can display image information in a plurality of directions. Because the cylindrical display enables information or images to be viewed from all directions, it can provide image information, such as advertisements, to a larger number of people than a flat display having a dead angle.

Also, there is known a transportable book-information management apparatus utilizing a cylindrical shape. In the book-information management apparatus, a transparent cylindrical support attached to an outer surface of the apparatus is rotated and respective images of book backbones, which are provided by a cylindrical flexible display within the transparent cylindrical support, are changed with the rotation of the transparent cylindrical support such that book information is given to users of the book-information management apparatus (see, e.g., Japanese Laid-open Patent Publication No. 2007-72375 and "DynaScan's spectacular LED video display",
http://www.dynascanusa.com/360_degree_led_video_displays.html).

For that type of known apparatus using the cylindrical display, however, the form of utilization is limited to only information providing means.

SUMMARY

According to an aspect of the embodiment of the invention, an apparatus includes a display unit for displaying goods information, a detector for detecting individually a plurality of potential customers in front of the display unit, a control unit for controlling the display unit to display a plurality of display areas in the display unit, each of the display areas displaying information of respective one of the goods, the number of the plurality of display areas corresponding to the number of the plurality of potential customers detected by the detector, an input unit for receiving an input designating any one of the display areas by any of the potential customers; and, a selector for selecting one of the goods corresponding to the one of display areas displayed by the input unit.

BRIEF DESCRIPTION OF THE DRAWINGS

FIG. 1 illustrates one example of the hardware configuration of a goods selection apparatus;
FIG. 2 is a side view of the goods selection apparatus to explain the detection function of a human body detecting device 8 and a height detecting device 9;
FIG. 3 is a block diagram illustrating one example of the functional configuration installed in the goods selection apparatus;
FIG. 4 is a plan view illustrating the positional relationship between the goods selection apparatus and a person;
FIG. 5 is a plan view of a goods selection apparatus provided with a display device having a polygonal shape;
FIG. 6A is an explanatory view to explain one example of a commodity image output from a commodity image output function unit;
FIG. 6B is an explanatory view to explain another example of the commodity image output from the commodity image output function unit;
FIG. 7 illustrates one example of a screen view regarding purchase of a commodity;
FIG. 8 illustrates one example of a flowchart of a goods selection process executed by the goods selection apparatus;
FIG. 9 illustrates examples of the goods selection apparatus in different states of use; and
FIG. 10 illustrates practical examples of different screen views in the goods selection apparatus.

DESCRIPTION OF EMBODIMENT

A goods selection apparatus according to an embodiment will be described below with reference to the drawings. A goods selection apparatus of the embodiment is a apparatus for selecting the commodity which is a kind of goods.

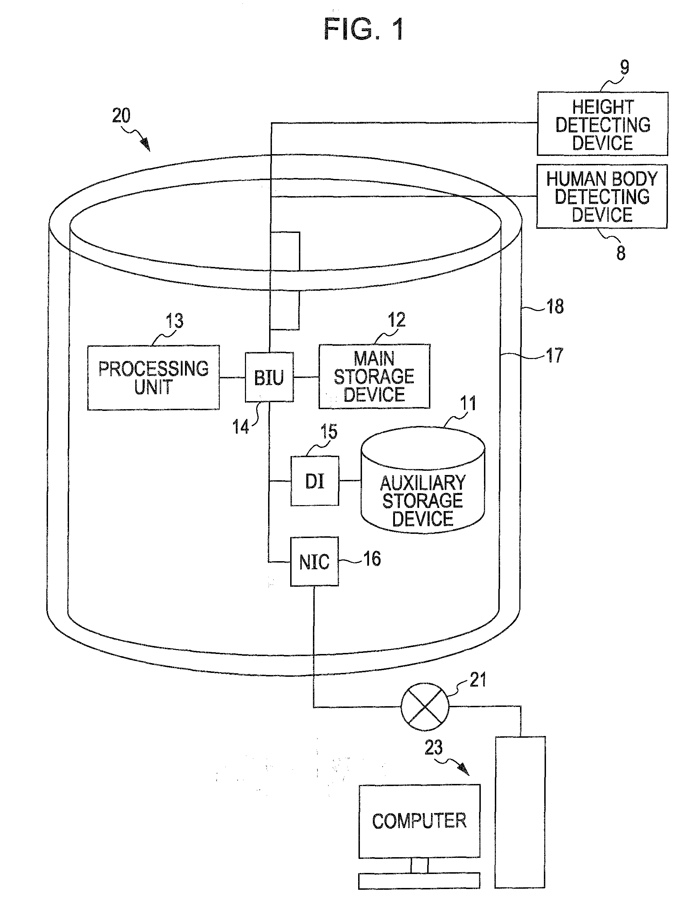

In FIG. 1, reference numeral 20 denotes a goods selection apparatus, 11 denotes an auxiliary storage device, 12 denotes a main storage device, 13 denotes a processing unit, 14 denotes a bus interface unit (BIU), 15 denotes a disk interface (DI), and 16 denotes a network interface card (NIC), Further, reference numeral 17 denotes a display device, 18 denotes an input device, 8 denotes a reception device, 9 denotes an image taking device, 21 denotes a network such as the Internet, 22 denotes a base station for wireless communication, and 23 denotes a computer.

The goods selection apparatus 20 includes the auxiliary storage device 11, the main storage device 12, the processing unit 13, the bus interface unit 14, the disk interface 15, the network interface card 16, the display device 17, and the input device 18. The goods selection apparatus 20 further includes a human body detecting device 8 and a height detecting device 9. The goods selection apparatus 20 and the computer 23 are connected to each other via the network 21 such as the Internet. In addition, the auxiliary storage device 11, the main storage device 12, the processing unit 13, the bus interface unit 14, the disk interface 15, and the network interface card 16 are disposed inside the display device 17.

The hardware components of the goods selection apparatus 20 and the computer 23 will be described below one by one.

The auxiliary storage device 11 is one of a magnetic disk drive, an SSD (Solid State Drive) using a nonvolatile memory such as a flash memory, a Floppy (registered trademark) disk drive, and an optical disk drive. The auxiliary storage device 11 reads and loads a program which is written in the programming language and which is recorded on a medium such as an optical disk or a Floppy (registered trademark) disk.

The main storage device 12 includes a main memory, a cache memory, and a flash memory, and it stores commands and data. The program loaded in the auxiliary storage device 11 can be temporarily loaded in the main storage device 12. Further, the main storage device 12 is utilized as a frame buffer for holding image information that is to be displayed on the display device 17.

The main memory can be constituted as a SIMM (Single Inline Memory Module) or a DIMM (Dual Inline Memory Module). The flash memory can be constituted as an EPROM (Erasable Programmable ROM).

The processing unit 13 is a device for executing arithmetic and logical processing, such as the four fundamental arithmetic operations and logical operations. The processing unit 13 has the function of executing a compile program and converting the program loaded in the main storage device 12 or the auxiliary storage device 11 to commands which are coded in the machine language to be directly executable by the processing unit 13. More specifically, the processing unit 13 reads the commands, which are coded in the machine language, from the main storage device 12, or converts the program to the commands, which are coded in the machine language, when the program is executed, and then loads those commands in a register within the processing unit 13. Further, the processing unit 13 can execute the commands loaded in the register such that the arithmetic and logical processing is executed to perform various kinds of calculations and control.

Still further, the processing unit 13 executes image data processing such as coordinate transform from a three-dimensional space, e.g., apex coordinates, to a two-dimensional plane of the display device 17.

The bus interface unit 14 is a chip set which is connected to the main storage device 12, the processing unit 13, and the disk interface 15. The bus interface unit 14 includes a control circuit which functions in accordance with predetermined standards, such as AGP (Accelerated Graphics Port) or PCI Express. The bus interface unit 14 further includes various circuits, such as a PCI (Peripheral Component Interconnect) bus, IDE (Integrated Device Electronics), a keyboard port, a mouse port, and a USB. The bus interface unit 14 is connected via the bus to the input device 18 and the display device 17, which are disposed at an outer circumference of the goods selection apparatus 20. As an alternative, the bus interface unit 14 may comprise two or more chip sets which are separately provided for high-rate communication and low-rate communication depending on the communication rates of target components connected to the bus.

The disk interface 15 is a connection circuit for interconnecting the processing unit 13 and the auxiliary storage device 11. The disk interface 15 functions in accordance with predetermined standards, such as SerialATA, SCSI, or FC (Fiber Channel).

The network interface card 16 is a hardware component which is used to perform communication between computers within a computer network. The network interface card 16 includes a circuit, such as Ethernet (registered trademark) or a token ring, for performing communication by the use of a particular physical layer and data link layer.

The display device 17 is a display device capable of displaying images output from the processing unit 13 while presenting screen views in plural directions. Examples of the display device 17 include an LED (Light Emitting Diode) display, a liquid crystal display, a plasma display, an organic EL (electroluminescence) display, and an inorganic EL display. Those displays are each designed to function as the display device 17 by coupling a plurality of display modules each having the curvature set in advance such that the display modules cooperatively provide a cylindrical shape.

Still another example of the display device 17 is a projector screen of the rear-projected type. In that type of projector screen, a projector is installed on the rear side of a cylindrical screen and an image is projected onto the cylindrical screen by using a lens which can project an incident ray of light in all directions (360 degrees).

While the display device 17 is designed so as to provide a view in all directions in this embodiment, the type of the display device 17 is not limited to one providing a view in all directions and the viewing direction may be determined depending on the installation environment of the display device 17. For example, when the goods selection apparatus 20 is installed in an area having no dead angle, the display device 17 has a center angle of 360 degrees. When the goods selection apparatus 20 is installed in front of a wall, the display device 17 has a center angle of 180 degrees.

The input device 18 is a position input device arranged on an outer circumferential surface of the display device 17. Because the input device 18 is transparent to such an extent that an image displayed on the display device 17 can be exposed to the outside as it is. When a person who is going to operate the input device 18 pushes a part of the view provided by the display device 17, the input device 18 receives an operating input. One example of the input device 18 is a touch panel. The touch panel usable as the input device 18 is of, e.g., the resistance film type in which an operation input position is detected in accordance with a voltage generated depending on the operation input position, or the electrostatic capacitance type in which an operation input position is detected by sensing a change of the electrostatic capacitance between a finger tip and a conductive film.

For the purpose of settling purchase of a commodity, the input device 18 has in its part the non-contact scanner function of reading an IC card which is used to identify a purchaser. The non-contact scanner function of reading the IC card, which provides such a settlement means, may be installed as a device (i.e., a scanner) separately from the input device 18 at a position between the input device 18 and the display device 17. The settlement means has the function of emitting electric waves to the IC card, causing an IC chip in the IC card to start up with an electromotive force generated in the IC card due to a resonance action, coding information of the IC chip, and receiving the coded information by an antenna. The settlement means transfers the received information to the processing unit 13.

The human body detecting device 8 is a sensor for detecting entry of a person into an operating area where the person comes in to operate the goods selection apparatus 20. The height detecting device 9 is a sensor for detecting the height of the person who has entered the operating area.

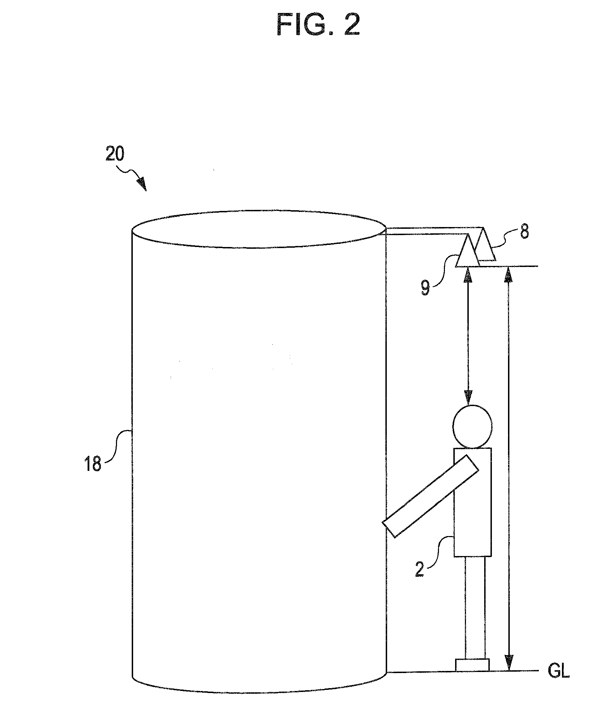

FIG. 2 is a side view of the goods selection apparatus 20 to explain the detection function of the human body detecting device 8 and the height detecting device 9. In FIG. 2, reference numeral 2 denotes the person who has entered the operating area.

While the human body detecting device 8 and the height detecting device 9 are each illustrated only one in FIG. 2, the human body detecting device 8 and the height detecting device 9 may be each installed plural depending on the center angle of the display device 17.

One exemplary sensor of the human body detecting device 8 is a pyroelectric infrared sensor. The pyroelectric infrared sensor senses an object present in the operating area where the person comes in to operate the goods selection apparatus 20, thus detecting a pyroelectric waveform signal. The processing unit 13 can discriminatively detect the object as a human body by comparing the detected pyroelectric waveform signal with a predetermined threshold. The predetermined threshold for detecting the human body can be obtained from a pyroelectric waveform signal resulting when a measurement has been made for a certain person in advance.

The human body detecting device 8, illustrated in FIG. 2, is arranged above the operating area of the goods selection apparatus 20. With such a layout, the human body detecting device 8 can generate the pyroelectric waveform signal depending on the moving speed of a person 2 who enters the operating area and the body dimensions of the person 2.

The height detecting device 9 is a sensor for detecting the height of the person who has entered the operating area. One example of such a sensor is an ultrasonic sensor.

The height detecting device 9, illustrated in FIG. 2, is arranged above the operating area of the goods selection apparatus 20.

In a height calculation process, the processing unit 13 emits a radiation pulse into the operating area from the ultrasonic sensor, and determines a reflection time from a reference plane GL, which is defined when no object is present, by using a time difference between the radiation pulse and a reflection pulse, which is received after being reflected by the object (i.e., the reference plane GL) in the operating area. Because the distance from the ultrasonic sensor to the reference plane GL is constant, the distance between the ultrasonic sensor and the reference plane GL can be determined based on the reference-plane reflection time.

Further, the processing unit 13 steadily emits the radiation pulse and determines a head reflection time of the reflection pulse, when the person 2 enters the operating area and the emitted radiation pulse is reflected to return upon striking against the head of the person 2. The height of the person 2 is calculated by using the difference between the head reflection time and the reference-plane reflection time and the distance between the ultrasonic sensor and the reference plane GL.

The computer 23 includes hardware having the same functions as those of the auxiliary storage device 11, the main storage device 12, the processing unit 13, the bus interface unit 14, the disk interface 15, and the network interface card 16.

The computer 23 receives data from the goods selection apparatus 20 through a network interface card (not depicted) and executes the program loaded in the auxiliary storage device 11.

Be it noted that the computer 23 is able to function as an authentication system and an order receiving system as described later.

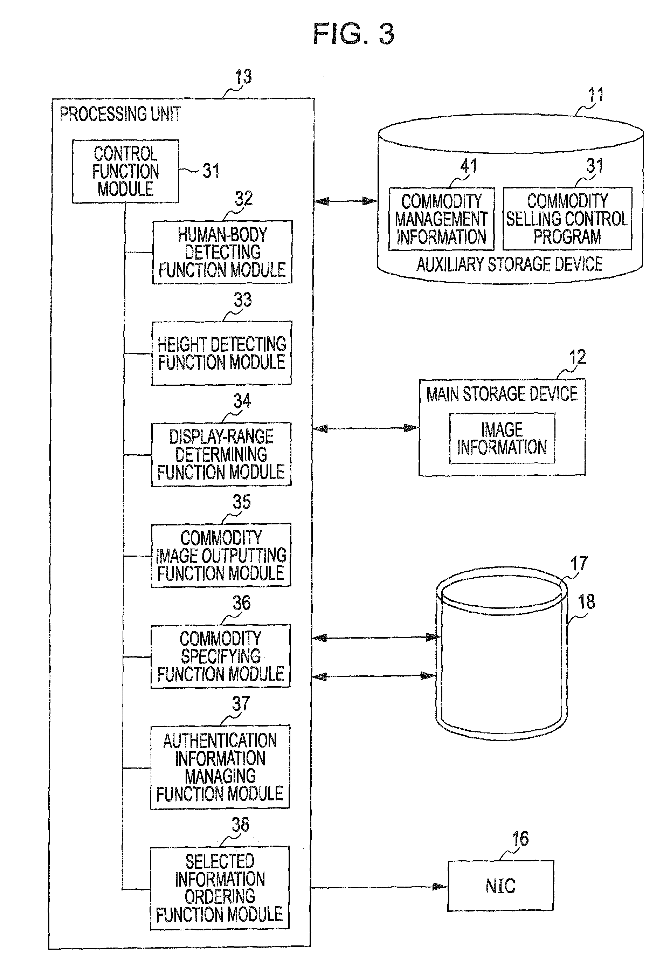

FIG. 3 illustrates one example of the functional configuration installed in the goods selection apparatus 20.

The functions installed in the processing unit 13 are provided by a control function module 31, a human-body detecting function module 32, a height detecting function module 33, a display range determining function module 34, a commodity image outputting function module 35, a commodity specifying function module 36, an authentication information managing function module 37, and a selected information ordering function module 38.

A goods selection control program 30 describes the functions, which are specified as the above-mentioned modules including from the control function module 31 to the selected information ordering function module 38, by using the programming language. By executing the goods selection control program 30, the processing unit 13 can execute the respective functions of the various modules including from the control function module 31 to the selected information ordering function module 38. The auxiliary storage device 11 stores the goods selection control program denoted by 30 and commodity management information denoted by 41. Also, the main storage device 12 or the auxiliary storage device 11 stores, as the commodity management information 41, image information that is related to commodities and is stored in the auxiliary storage device 11. The commodity management information 41 includes commodity images and commodity information such as commodity names, prices, and delivery dates. The commodity information is updated by the order receiving system, described later, via the network.

The functions executed by the goods selection apparatus 20 will be described below one by one.

The control function module 31 has the control function of controlling execution of the respective functions of the human-body detecting function module 32 to the selected information ordering function module 38, and controlling sharing of events in those function modules. The control function of the control function module 31 is first executed after starting the execution of the goods selection control program 30.

The human-body detecting function module 32 has the function of discriminatively determining an object as a human body by executing a threshold process in terms of S/N ratio on the pyroelectric waveform signal detected by the human body detecting device 8.

The height detecting function module 33 has the function of emitting the radiation pulse into the operating area, which has been detected by the height detecting device 9, from the ultrasonic sensor, and calculating the height of the person 2 by using the difference between the head reflection time and the reference-plane reflection time and the distance between the ultrasonic sensor and the reference plane GL.

The display-range determining function module 34 has the function of determining a display range to be displayed on a partial area of the display device 17, which is positioned near the person detected by the human body detecting device 8, depending on the number of persons detected. In the following description, a term "display range L" implies the circumferential length of the input device 18, and a term "display range H" implies the vertical length of the input device 18.

Looking at the circumferential length of the input device 18, if the display range is set excessively long in the circumferential direction, a area visually unrecognizable by a person and a area inconvenient to reach for operation occur due to the problems with the viewing angle of the person and the operability when the person operates the input device 18. Therefore, the circumferential length of the input device 18 is preferably determined in consideration of the problems with the viewing angle of the person and the operability when the person operates the input device 18.

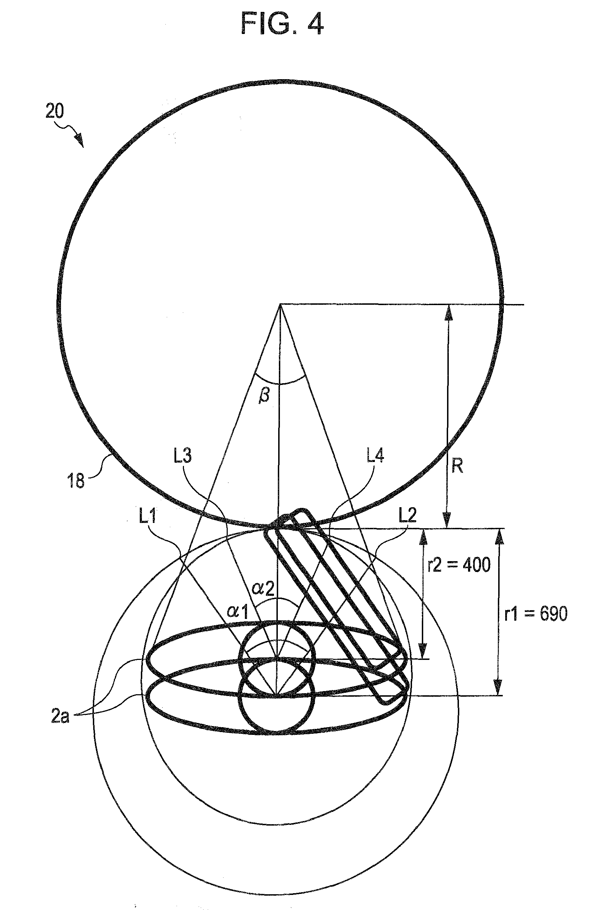

A method for determining the display range by the display-range determining function module 34 will be described below. For that purpose, an example of determining the display range L is first described with reference to FIG. 4, which is a plan view illustrating the positional relationship between the goods selection apparatus 20 and a person 2a or 2b.

In FIG. 4, character R represents half the inner diameter of the input device 18. Character r1 represents the distance between the input device 18 and the person 2a when the person 2a operates the input device 18. Character r2 represents the distance between the input device 18 and the person 2b when the person 2b operates the input device 18. Character $\alpha$1 represents an angle twice the maximum viewing angle of the person 2a, which is indicated by a center angle of a circle having the radius r1 with the head of the person 2a being at the center of the circle. Character $\alpha$2 represents an angle twice the maximum viewing angle of the person 2b, which is indicated by a center angle of a circle having the radius r2 with the head of the person 2b being at the center of the circle.

The height of the person 2a is 180 [cm], and r1 = 690 [mm] is specified. The height of the person 2b is 130 [cm], and r2 = 400 [mm] is specified.

The operating distance r between the person and the display device 17 is a distance variable depending on the length of an arm of the person, i.e., a distance variable depending on the height of the person. In general, the operating distance r1 is 400 [mm] when the person 2b with the height of 130 cm extends the hand to operate the input device 18, and the operating distance r2 is 690 [mm] when the person 2a with the height of 180 cm extends the hand to operate the input device 18. Accordingly, the operating distance r between the person and the display device 17 is specified as follows:

$$400 \, [mm] \leq r \leq 690 \, [mm] \, ...(1)$$

Also, the viewing angle of the person is in the range of 15° to 30° when the person watches something with a care. Accordingly, the center angle $\alpha$ twice the viewing angle is specified as follows:

$$\pi/6 \leq \alpha \leq \pi/3 \, ...(2)$$

In this embodiment, the display range L of the input device 18 can be specified based on the following formula by using the operating distance r and the center angle $\alpha$ twice the viewing angle of the person:

$$L = r \times \alpha \, ...(3)$$

Accordingly, a maximum display range L(max) can be calculated by (maximum r) $\times$ (maximum $\alpha$), and a minimum display range L(min) can be calculated by (minimum r) $\times$ (minimum $\alpha$). From the relationships of the above formulae (1) to (3), therefore, the maximum and minimum display ranges L can be determined as follows:

$$L(max) = \pi/3 \times 690 = 230\pi \quad ...(4\text{-}1)$$

$$L(min) = \pi/6 \times 400 = 66\pi \quad ...(4\text{-}2)$$

$$66\pi \leq L \leq 230\pi \quad ...(5)$$

Further, when the input device 18 is used by a plurality of persons, the input device 18 is employed such that the circumferential length $2\pi R$ of the input device 18 is divided depending on the number n of persons using the input device 18. In that case, the display range L per person can be determined from the following formula:

$$L = 2\pi R/n \quad ...(6)$$

For example, when one input device 18 is operated by six persons in consideration of L(max), $230\pi = (\pi/3) \times R$ is obtained from the definition of the circular measure method because of L(max) = $230\pi$ [mm], thus resulting in R = 690 [mm]. Also, in the case of L(min), R = 198 [mm] is resulted because of L(min) = $66\pi$ [mm].

Further, when the display range L is determined in such a manner, it is desirably set such that the shoulders of operating persons, i.e., parts of human bodies, do not contact with each other. Assuming the shoulder width to be 700 [mm], the shoulders of the operating persons can be avoided from contacting with each other by specifying an center angle $\beta$ of the display device 17 as follows:

$$700 \leq (R + r) \times \beta \quad ...(7)$$

$$L = R \times \beta \quad ...(8)$$

Thus, the contact between the shoulders can be prevented by setting the display range L so as to satisfy the formulae (7) and (8).

In that case, the display range L can be obtained from the formula (8) after determining the center angle $\beta$ by the use of the preset length R and r that is provided as a measured value or a specified value.

As seen from the above-described examples, the display-range determining function module 34 can determine the display range L for each of various cases.

A first case is premised on that the display range L is fixedly set in consideration of a maximum height of the person (i.e., the height of 180 cm in the above-described examples). In this case, when a human body is detected by the human-body detecting function module 32 or when the input device 18 is touched by a person, the display-range determining function module 34 displays an image in front of the person over the display range that is specified by the fixed display range L.

A second case is premised on that the display range L is calculated depending on the height of the person. In this case, the display-range determining function module 34 specifies the distance between the input device 18 and the person from the height of the person, which has been detected by the height detecting device 8, and determines the display range L in accordance with the formula (3).

A third case is premised on that the display range L is determined in accordance with the formula (6). In this case, when one person uses the goods selection apparatus 20, the display range L is provided so as to cover all directions when the person operates the input device 18. However, the display range L gradually reduces as the number of persons using the input device 18 increases.

In any of the above-described first to third cases, the display-range determining function module 34 may determine, as the display range L, a value calculated from the formula (8) when the display range L is smaller than the value calculated from the formula (8).

Thus, the display-range determining function module 34 can determine the display range L depending on various cases.

Meanwhile, the display range H is preferably determined depending on the height of the operating person, i.e., depending on how the person is tall. In order to ensure good viewability in the vertical direction for commodities displayed on the display device 17 and to maintain good operability within the range which is represented by the formula (1) and is reachable by the hand of the person, the display range H is desirably set such that an angle of elevation is less than 45° with respect to a horizontal level of the line of human sight. In the case of the height of 180 [cm] and the operating distance r2 = 690 [mm], for example, the display range H can be set so as to span from a horizontal position of the line of sight of the operating person sight to a position located 690 [mm] above the horizontal position in the vertical direction. As another case satisfying such a condition, the height of the display range H may be set to the same height as that of the operating person.

Because the height of the operating person can be detected by the height detecting device 9, the display range H can be set depending on the height of the operating person.

As seen from the above-described examples, the display-range determining function module 34 can determine the display range H for each of various cases.

A first case is premised on that the display range H is fixedly set in consideration of a maximum height of the person (i.e., the height of 180 cm in the above-described examples). In this case, when a human body is detected by the human-body detecting function module 32 or when the input device 18 is touched by a person, the display-range determining function module 34 displays an image in front of the person over the display range that is specified by the fixed display range H.

A second case is premised on that the display range H is calculated depending on the height of the person. In this case, the display-range determining function module 34 determines the display range H from the height of the person, which has been detected by the height detecting device 8, in a similar manner to the above-described example.

Thus, the display-range determining function module 34 can determine the display range H depending on various cases.

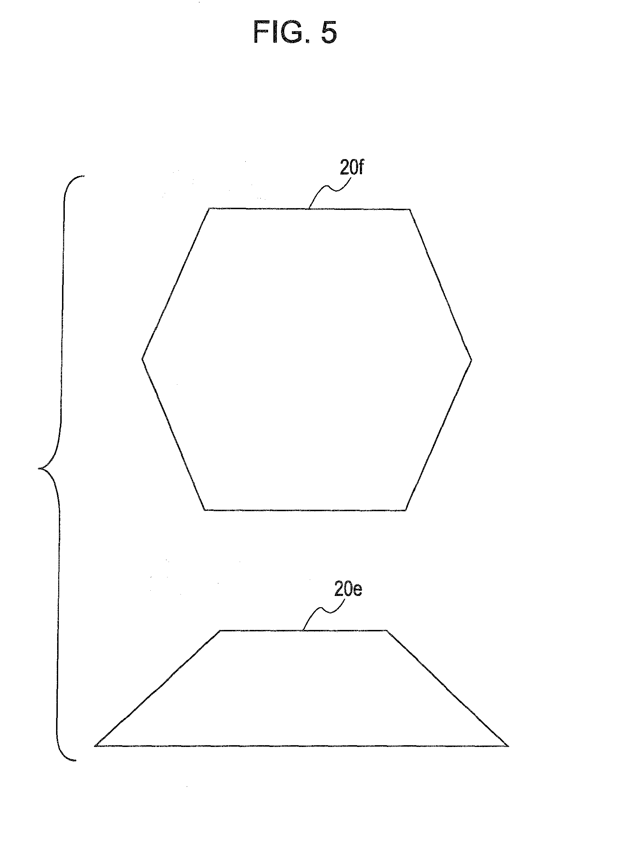

While the above description has been made for the display device 17 having the cylindrical shape with reference to FIG. 4, the display device 17 capable of displaying screen views in plural directions may be a display device having a polygonal shape. FIG. 5 is a plan view of a goods selection apparatus provided with a display device having a polygonal shape. An upper part of FIG. 5 represents a plan view of a goods selection apparatus, denoted by 20f, including an omnidirectional display device, and a lower part of FIG. 5 represents a plan view of a goods selection apparatus, denoted by 20e, including a 180°-directional display device.

In that type of goods selection apparatus 20, one side of a polygon defining the shape of the display device 17 may be set to the same length as that of the display range L. Preferably, as in the above-described case, the display range L is fixedly set in accordance with the maximum height (i.e., the height of 180 cm in the above-described example). The number of apical angles and the number of sides of the polygon can be obtained from the formula (6) depending on the number of persons using the input device 18 on the basis of a circle passing the apexes of the polygon. Further, since the display range L is a fixed value in the case of the display device 17 having the polygonal shape, the number of apical angles is determined from the relationship between L and R after determining R.

When the display range L is held at a fixed value, there is not need of calculating the display range L depending on the height of the operating person. Accordingly, height detecting device 9 is not indispensable.

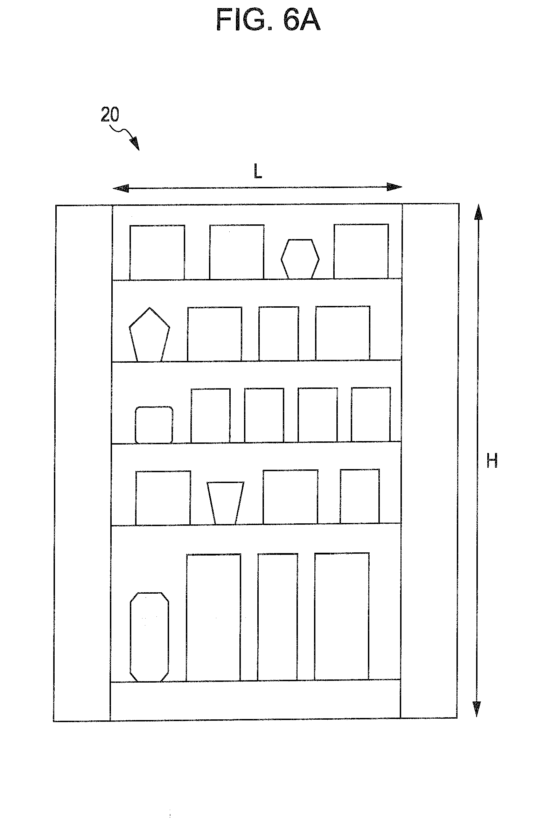

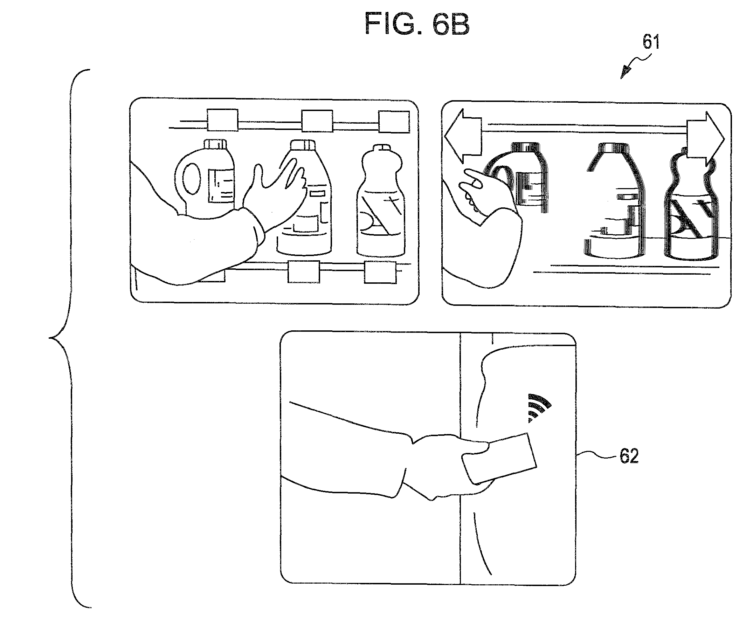

The commodity image outputting function module 35 outputs commodity images over a display area, which is provided by the display device 17 and which is specified in accordance with both the display range L determined by the display-range determining function module 34 and the display range H corresponding to the height of the input device 18. Examples of the commodity images output by the commodity image outputting function module 35 will be described with reference to Figs. 6A and 6B.

In FIG. 6A, H represents the height of the display range in the vertical direction, and L represents the length of the display range in the circumferential direction. In the display area specified by the display ranges L and H, a plurality of commodity images are displayed as if the commodities are laid on racks.

FIG. 6B illustrates a part of the rack illustrated in FIG. 6A. Character 61 represents two successive scenes, including screen views, which illustrate a change in view when commodities to be displayed are changed. As illustrated in the screen views denoted by 61, the commodity images are displayed by the commodity image outputting function module 35 such that, when the person 2 touches the input device 18 in its part corresponding to a particular rack and moves the displayed particular rack in the horizontal direction, only the commodity images corresponding to the displayed particular rack are moved in the horizontal direction. With such movement of the commodity images, the commodities having been displayed so far are moved away from the display area and new commodities are displayed. By thus moving the displayed rack in the horizontal direction (i.e., by dragging it to the outside of the screen) such that the commodities can be successively moved away and into the view, an intuitive interface can be provided to the operating person and the number of commodities displayable as images by the commodity image outputting function module 35 can be increased in total.

The commodities are registered as the commodity management information 41. Stated another way, the commodities successively displayed with the rotational movement of the illustrated rack are presented through a process of successively obtaining commodity data from the commodity management information 41 by the commodity image outputting function module 35.

The commodity specifying function module 36 has the function of obtaining position data input through the input device 18 and specifying the commodity corresponding to the relevant position. The commodity specifying function module 36 always holds the correspondence relationship between ID data of each of the commodities displayed on the display device 17 and the position on it. By obtaining the position input by the person through the input device 18, therefore, the commodity specifying function module 36 can specify the commodity corresponding to the input position.

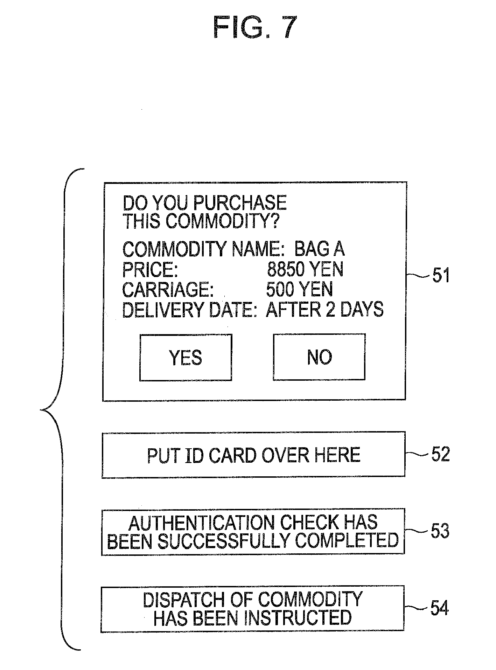

Further, the commodity specifying function module 36 outputs a screen view regarding purchase of the commodity displayed on the screen. FIG. 7 illustrates one example of the screen view regarding purchase of the commodity. When an input for selecting the commodity is confirmed, for example, by detecting two successive touches on one commodity image, the commodity specifying function module 36 displays a confirmation screen for purchase of the commodity along with detailed information of the commodity, as indicated by a screen 51 in FIG. 7.

The authentication information managing function module 37 has the function of confirming the ID of a purchaser with respect to the relevant purchase of the commodity. Because the input device 18 has in its portion the scanner function of reading an IC card, the authentication information managing function module 37 displays a screen 52 in the portion of the input device 18 having the scanner function (i.e., in the scanner portion), thus prompting the purchaser to put the ID card over there. When the purchaser puts the IC card over the scanner portion as represented by 62 in FIG. 6B, the authentication information managing function module 37 inquires the ID, which has been read by the scanner portion, to an externally connected authentication system via the network interface card 16. When an authentication check is successfully completed by the authentication system, the authentication result is notified to the authentication information managing function module 37, whereupon the successful completion of the authentication is displayed as indicated by a screen 53 in FIG. 7.

The selected information ordering function module 38 executes a process of ordering, via the network interface card 16, the commodity, which has been selected to be purchased, to an order receiving system of an externally connected company that actually handles the commodity. Upon receiving a reply indicating confirmation of the ordering and dispatch of the commodity from the order receiving system via the network, the selected information ordering function module 38 displays a message that dispatch of the commodity has been instructed, as indicated by a screen 54 in FIG. 7.

A processing flow executed by using the above-described functions of the goods selection apparatus 20 will be described below.

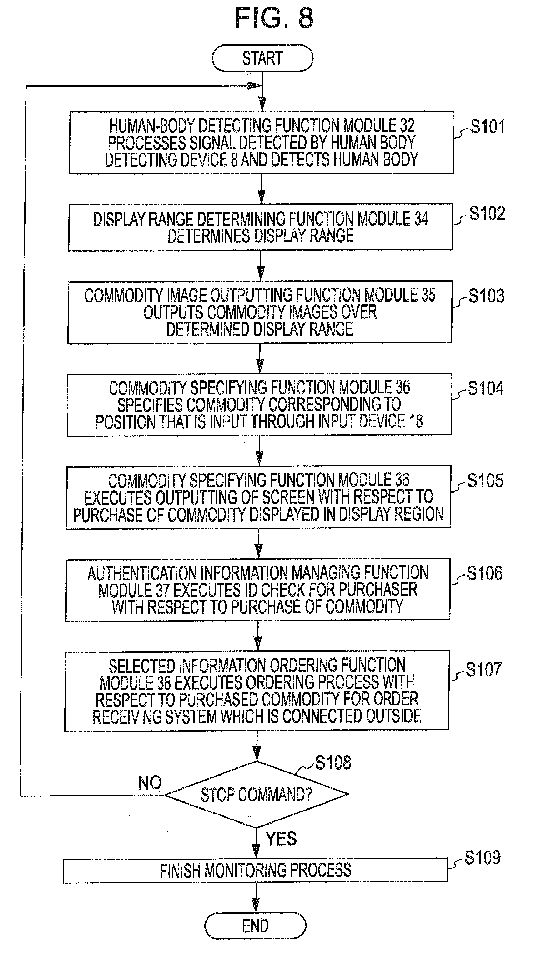

FIG. 8 illustrates one example of a flowchart of a goods selection process executed by the goods selection apparatus 20.

First, after a startup process of the goods selection apparatus 20 is completed, the human-body detecting function module 32 processes the signal detected by the human body detecting device 8 and detects a human body (S101). Then, the display range determining function module 34 determines the display range L (S102). The commodity image outputting function module 35 outputs commodity images over the display range L determined by the display-range determining function module 34 (S103). In this step, a plurality of commodity images are output and displayed over the display range, as illustrated in FIG. 6A. The commodity specifying function module 36 specifies the commodity corresponding to the position that is input through the input device 18 (S104). In this step, the commodity corresponding to the position input through the input device 18 by the person operating the goods selection apparatus 20 is specified. As described above with reference to FIG. 6B, the operating person may move the displayed commodities in the horizontal direction before specifying desired one of the displayed commodities, and then may specify the desired commodity. The commodity specifying function module 36 executes outputting of a screen with respect to purchase of the commodity displayed in the display area (S105). One example of the screen output in step S105 is as per indicated by the screen 51 in FIG. 7.

The authentication information managing function module 37 has the function of executing the ID check for the purchaser with respect to the purchase of the commodity (S106). In this step, the authentication information managing function module 37 displays the screen 52 illustrated in FIG. 7, thus prompting the purchaser to put the ID card over the scanner portion. Further, the authentication information managing function module 37 inquires the ID, which has been read by the scanner portion, to the externally connected authentication system. When the authentication check has been successfully completed, the successful completion of the authentication is displayed as indicated by the screen 53 in FIG. 7. The selected information ordering function module 38 executes an ordering process with respect to the purchased commodity for the order receiving system which is connected outside (S107). After the completion of step S107, a message indicating that dispatch of the commodity has been instructed is displayed as indicated by a screen 54 in FIG. 7. Thereafter, the processing device 13 monitors whether a system stop command is issued through the input device 18 or the network. If there is no stop command (No in S108), the above-described steps S101 to S107 are continuously executed. If there is a system stop command (Yes in S108), the processing unit 13 finishes the monitoring process (S109), whereby the flow of the goods selection process is brought to an end.

As an alternative, the IC card authentication process may be executed prior to step S101 such that commodities are displayed in consideration of historical data of the operating person. In that case, in step S103, the commodities which have been frequently purchased by the operating person so far may be first displayed on the screen of the display device 17, or the commodities fit for the age bracket including the operating person may be displayed.

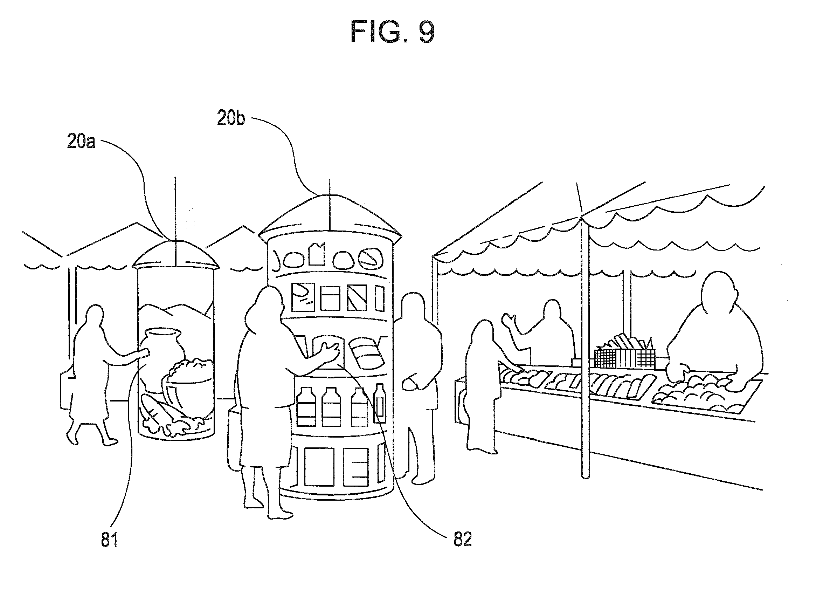

FIG. 9 illustrates examples of the goods selection apparatus in different states of use.

FIG. 9 illustrates two goods selection apparatuses 20a and 20b.

The goods selection apparatus 20a is in a state where the authentication of the IC card is performed as represented by 62 in FIG. 6B. The goods selection apparatus 20b is in a state where the selection of the commodity is performed by the operating person as represented by 61 in FIG. 6B.

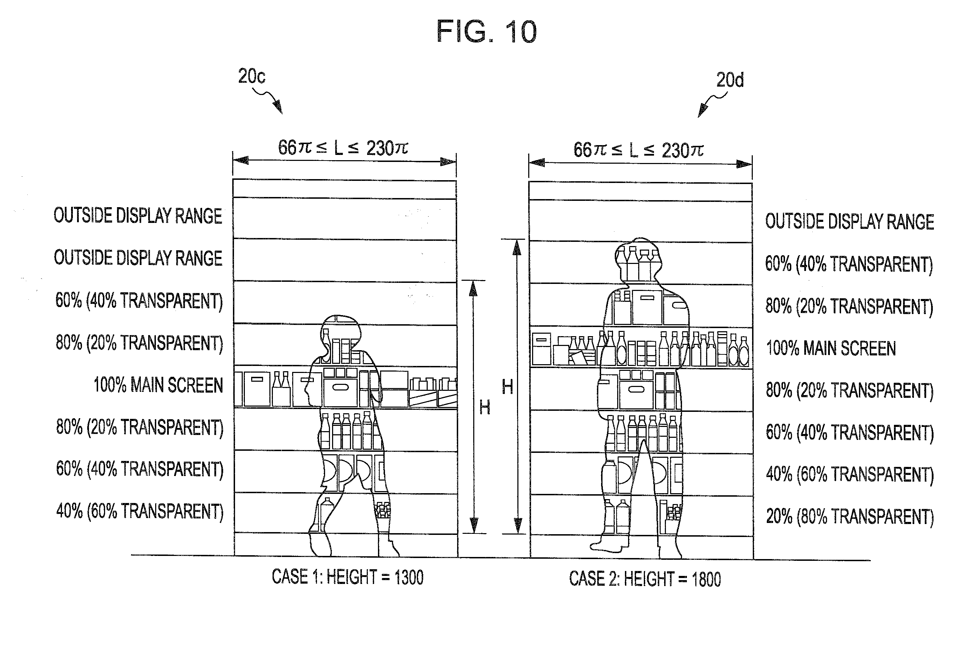

FIG. 10 illustrates practical examples of screen views in the goods selection apparatus.

FIG. 10 illustrates two goods selection apparatuses 20c and 20d.

The goods selection apparatus 20c is in a state where the selection of the commodity is performed by an operating person who is short. The goods selection apparatus 20d is in a state where the selection of the commodity is performed by an operating person who is tall.

As illustrated in FIG. 10, the screen view may be displayed such that a part of the screen view including the rack where the operating person is going to select the commodity is displayed at transparency of 100%, and that other parts of the screen view including other racks are displayed at lower levels of transparency. By changing the transparency of the screen view in such a manner, the operating person can more clearly recognize the commodity to be selected. Additionally, by increasing the transparency of the screen view in match with the figure of the person in FIG. 10, the operating person can more clearly recognize the commodity not only in the horizontal direction, but also in the vertical direction.

As described above, the goods selection apparatus according to the embodiment enables a plurality of persons to perform the operations of selecting respective commodities on the screen of the display device which can display image information in a plurality of directions.

Further, in the goods selection apparatus, commodities can be visualized in the form similar to the case of selling actual commodities in such a manner as permitting the selection of the commodity and the ordering of the commodity with no need of exhibiting and preserving the actual commodities. Comparing with the case of exhibiting the actual commodities, therefore, the selection of the commodity and the ordering of the commodity can be performed while ensuring saving of a space. As a result of those advantages, a place for exhibiting the commodities is not needed and the commodities can be provided to consumers from the stock in a shorter period and over a shorter distance, thus resulting in reduction of the so-called food mileage. Further, distribution channels can be simplified and traceability of the commodities can be improved.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A goods selection apparatus for selecting goods on the basis of displayed goods information, the goods selection apparatus comprising:

   a display unit for displaying goods information;
   a detector for detecting individually a plurality of potential customers in front of the display unit;
   a control unit for controlling the display unit to display a plurality of display areas in the display unit, each of the display areas displaying information of respective one of the goods, the number of the plurality of display areas corresponding to the number of the plurality of potential customers detected by the detector;
   an input unit for receiving an input designating any one of the display areas by any of the potential customers; and
   a selector for selecting one of the goods corresponding to said one of display areas designated by the input unit.

2. The goods selection apparatus according to claim 1, wherein
   the display unit forms a cylindrical shape,
   The controller controls display unit to display the length of the arc of each of the display areas as not less than $66\pi$ [mm] and not more than $230\pi$ [mm]

3. The goods selection apparatus according to any of the preceding claims, wherein the display unit has a cylindrical shape, the goods selection apparatus further comprises a height detecting unit for detecting a height of at least one of the potential customers, and
   an arcuate length (L) of a display area displayed for the operating person is defined by;

$$L \leq r \times \alpha$$

   Where r: distance between an outer circumferential surface of the input unit and the detected potential customer, and
   $\alpha$ : center angle twice a viewing angle of the detected potential customers.

**4.** The goods selection apparatus according to any of the preceding claims, wherein the goods selection apparatus further comprises a height detecting unit for detecting a height of at least one of the potential customers, and an arcuate length (L) of a display area displayed for the detected potential customers is defined by;

$$L \leq \theta \times (R + r)$$

where θ: center angle corresponding to an operating range of the input unit,
R: half an inner diameter of the input unit, and
r: distance between an outer circumferential surface of the input unit and the detected potential customer.

**5.** The goods selection apparatus according to dim 4, wherein, depending on a height (H1) detected by the height detecting unit for detecting the height of the at least one of the potential customer, an upper limit (H2) of a displayable height of each of the display areas is defined by:

$$H2 \leq H1$$

**6.** The goods selection apparatus according to any of the preceding claims, wherein, for determining a display area depending on the number of the potential customers detected, an arcuate length (L) of the display unit corresponding to the display area is defined by the following formula with respect to the number (N) of the potential customer detected;

$$L = 2\pi R/N$$

where R: half an inner diameter of the input unit.

**7.** A method selecting goods on the basis of displayed goods information using by a goods selection apparatus, the method comprising:

a display unit for displaying goods information;
detecting individually a plurality of potential customers in front of the display unit of the goods selection apparatus;
controlling the display unit to display a plurality of display areas in the display unit, each of the display areas displaying information of respective one of the goods, the number of the plurality of display areas corresponding to the number of the plurality of potential customers detected by the detector;
receiving an input designating any one of the display areas by any of the potential customers; and
selecting one of the goods corresponding to said one of display areas designated.

**8.** A computer program which, when executed on a computing device, causes the computing device to carry out a method of selecting goods, the method comprising:

displaying goods information on a display unit;
detecting individually a plurality of potential customers in front of the display unit;
controlling the display unit to display a plurality of display areas in the display unit, each of the display areas displaying information of a respective one of the goods, the number of the plurality of display areas corresponding to the number of the plurality of potential customers detected;
receiving an input designating any one of the display areas by any of the potential customers; and
selecting one of the goods corresponding to said one of the display areas designated.

# FIG. 1

# FIG. 2

# FIG. 3

13

**PROCESSING UNIT**

| CONTROL FUNCTION MODULE | ~31 |

32

HUMAN-BODY DETECTING FUNCTION MODULE

33

HEIGHT DETECTING FUNCTION MODULE

34

DISPLAY-RANGE DETERMINING FUNCTION MODULE

35

COMMODITY IMAGE OUTPUTTING FUNCTION MODULE

36

COMMODITY SPECIFYING FUNCTION MODULE

37

AUTHENTICATION INFORMATION MANAGING FUNCTION MODULE

38

SELECTED INFORMATION ORDERING FUNCTION MODULE

11

41  31

| COMMODITY MANAGEMENT INFORMATION | COMMODITY SELLING CONTROL PROGRAM |

AUXILIARY STORAGE DEVICE

12

MAIN STORAGE DEVICE

IMAGE INFORMATION

17
18

16

NIC

# FIG. 4

# FIG. 5

20f

20e

# FIG. 6A

FIG. 6B

EP 2 202 702 A1

# FIG. 7

DO YOU PURCHASE
THIS COMMODITY?

COMMODITY NAME:  BAG A
PRICE:                      8850 YEN
CARRIAGE:                500 YEN
DELIVERY DATE:  AFTER 2 DAYS

| YES | NO |

~51

PUT ID CARD OVER HERE ~52

AUTHENTICATION CHECK HAS
BEEN SUCCESSFULLY COMPLETED ~53

DISPATCH OF COMMODITY
HAS BEEN INSTRUCTED ~54

# FIG. 8

START

HUMAN-BODY DETECTING FUNCTION MODULE 32 PROCESSES SIGNAL DETECTED BY HUMAN BODY DETECTING DEVICE 8 AND DETECTS HUMAN BODY — S101

DISPLAY RANGE DETERMINING FUNCTION MODULE 34 DETERMINES DISPLAY RANGE — S102

COMMODITY IMAGE OUTPUTTING FUNCTION MODULE 35 OUTPUTS COMMODITY IMAGES OVER DETERMINED DISPLAY RANGE — S103

COMMODITY SPECIFYING FUNCTION MODULE 36 SPECIFIES COMMODITY CORRESPONDING TO POSITION THAT IS INPUT THROUGH INPUT DEVICE 18 — S104

COMMODITY SPECIFYING FUNCTION MODULE 36 EXECUTES OUTPUTTING OF SCREEN WITH RESPECT TO PURCHASE OF COMMODITY DISPLAYED IN DISPLAY REGION — S105

AUTHENTICATION INFORMATION MANAGING FUNCTION MODULE 37 EXECUTES ID CHECK FOR PURCHASER WITH RESPECT TO PURCHASE OF COMMODITY — S106

SELECTED INFORMATION ORDERING FUNCTION MODULE 38 EXECUTES ORDERING PROCESS WITH RESPECT TO PURCHASED COMMODITY FOR ORDER RECEIVING SYSTEM WHICH IS CONNECTED OUTSIDE — S107

S108
NO — STOP COMMAND?

YES

FINISH MONITORING PROCESS — S109

END

FIG. 9

# FIG. 10

20c

$66\pi \leq L \leq 230\pi$

OUTSIDE DISPLAY RANGE

OUTSIDE DISPLAY RANGE

60% (40% TRANSPARENT)

80% (20% TRANSPARENT)

100% MAIN SCREEN

80% (20% TRANSPARENT)

60% (40% TRANSPARENT)

40% (60% TRANSPARENT)

CASE 1: HEIGHT = 1300

20d

$66\pi \leq L \leq 230\pi$

OUTSIDE DISPLAY RANGE

60% (40% TRANSPARENT)

80% (20% TRANSPARENT)

100% MAIN SCREEN

80% (20% TRANSPARENT)

60% (40% TRANSPARENT)

40% (60% TRANSPARENT)

20% (80% TRANSPARENT)

CASE 2: HEIGHT = 1800

EP 2 202 702 A1

| | Europäisches Patentamt<br>European Patent Office<br>Office européen des brevets | **EUROPEAN SEARCH REPORT** | Application Number<br><br>EP 09 17 9783 |
|---|---|---|---|

**DOCUMENTS CONSIDERED TO BE RELEVANT**

| Category | Citation of document with indication, where appropriate, of relevant passages | Relevant to claim | CLASSIFICATION OF THE APPLICATION (IPC) |
|---|---|---|---|
| X | KELLYL DEMPSKI ET AL: "Touchable Interactive Walls: Opportunities and Challenges"<br>1 January 2005 (2005-01-01), ENTERTAINMENT COMPUTING - ICEC 2005 LECTURE NOTES IN COMPUTER SCIENCE;;LNCS, SPRINGER, BERLIN, DE, PAGE(S) 192 - 202 , XP019019860<br>ISBN: 9783540290346<br>* abstract *<br>* page 193 - page 202 *<br>* figures 1-4 *<br>----- | 1-8 | INV.<br>G07F9/02 |
| A | Daniel M. Russell, Alison Sue: "Using Large Public Interactive Displays for Collaboration"<br>UbiComp 2002 Workshop on Collaboration with Interactive Walls and Tables<br><br>1 October 2002 (2002-10-01), XP002577208<br>Retrieved from the Internet:<br>URL:http://www.ipsi.fraunhofer.de/ambiente/collabtablewallws/papers/index.html><br>[retrieved on 2010-04-12]<br>* the whole document *<br>----- | 1-8 | **TECHNICAL FIELDS SEARCHED (IPC)**<br><br>G07F |
| A | AU 2006 100 172 A4 (DYNASCAN TECHNOLOGY CORP) 8 June 2006 (2006-06-08)<br>* abstract *<br>* figure 1 *<br>----- | 1-8 | |

The present search report has been drawn up for all claims

| Place of search | Date of completion of the search | Examiner |
|---|---|---|
| The Hague | 12 April 2010 | Spitaler, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 17 9783

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2010

| Patent document cited in search report | | Publication date | Patent family member(s) | | Publication date |
|---|---|---|---|---|---|
| AU 2006100172 | A4 | 08-06-2006 | AU 2006200939 | A1 | 24-05-2007 |
| | | | TW 283382 | B | 01-07-2007 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2007072375 A